(19) Europäisches Patentamt
European Patent Office
Office européen des brevets

(11) **EP 3 860 877 B1**

(12) **FASCICULE DE BREVET EUROPEEN**

(45) Date de publication et mention de la délivrance du brevet:
**12.04.2023 Bulletin 2023/15**

(21) Numéro de dépôt: **19782970.8**

(22) Date de dépôt: **30.09.2019**

(51) Classification Internationale des Brevets (IPC):
**B60Q 1/14** *(2006.01)*

(52) Classification Coopérative des Brevets (CPC):
**B60Q 1/143;** B60Q 2300/056; B60Q 2300/41

(86) Numéro de dépôt international:
**PCT/EP2019/076483**

(87) Numéro de publication internationale:
**WO 2020/070079 (09.04.2020 Gazette 2020/15)**

(54) **PROCEDE DE COMMANDE D'UN DISPOSITIF D'ECLAIRAGE POUR L'EMISSION D'UN FAISCEAU D'ECLAIRAGE DE LA ROUTE NON EBLOUISSANT**

VERFAHREN ZUR STEUERUNG EINER BELEUCHTUNGSVORRICHTUNG ZUR EMISSION EINES BLENDFREIEN STRAHLENBÜNDELS ZUR BELEUCHTUNG EINER STRASSE

METHOD FOR CONTROLLING A LIGHTING DEVICE FOR EMITTING A NON-DAZZLING BEAM FOR LIGHTING THE ROAD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.10.2018 FR 1859145**

(43) Date de publication de la demande:
**11.08.2021 Bulletin 2021/32**

(73) Titulaire: **Valeo Vision**
**93012 Bobigny Cedex (FR)**

(72) Inventeur: **MIMOUN, Mickael**
**93012 Bobigny Cedex (FR)**

(74) Mandataire: **Valeo Visibility**
**Service Propriété Industrielle**
**c/o Valeo Vision**
**34, rue Saint André**
**93012 Bobigny (FR)**

(56) Documents cités:
| | |
|---|---|
| **EP-A1- 2 957 462** | **EP-A2- 2 562 039** |
| **EP-A2- 3 018 007** | **DE-A1-102017 001 505** |
| **FR-A1- 2 947 223** | **US-A1- 2013 049 587** |
| **US-A1- 2017 083 774** | |

**Description**

L'invention a trait au domaine de l'éclairage des véhicules automobiles. Plus particulièrement, l'invention concerne un procédé de commande d'un dispositif d'éclairage d'un véhicule automobile hôte pour l'émission d'un faisceau d'éclairage de la route non éblouissant pour un objet cible sur cette route.

Il est connu d'équiper les véhicules automobiles de systèmes d'éclairage pourvus :

- d'un système de capteur pour détecter un objet cible sur la route à ne pas éblouir et mesurer la position de cet objet, et
- d'un système d'éclairage pour émettre un faisceau non éblouissant en fonction de la position de cet objet.

A cet effet, ces projecteurs sont par exemple capables d'émettre un faisceau d'éclairage de la route pixélisé et sont pourvus d'une unité de contrôle capable d'allumer et/ou d'éteindre et/ou de modifier l'intensité lumineuse de chacun des pixels du faisceau. Le cas échéant, l'unité de contrôle permet ainsi de générer une zone non éblouissante dans le faisceau centrée, par extinction des pixels dans une zone centrée sur la position de l'objet cible à ne pas éblouir. De tels systèmes d'éclairage sont ainsi aptes à éclairer de façon optimale la route, sans éblouir d'autres utilisateurs de cette route.

Dans ce type de système, la position de l'objet à ne pas éblouir qui est renvoyée par le système de capteur correspond à un échantillonnage de la position réelle de cet objet sur la route au cours du temps.

Dés lors, la zone non éblouissante générée dans le faisceau est déterminée en fonction d'une position de l'objet cible non pas réelle mais acquise à un instant donné par le système de capteur.

Or, le système d'éclairage présente nécessairement un temps de traitement, ou latence, des informations entre l'instant de l'acquisition par le système de capteur de la position de l'objet cible et l'instant de la génération par le projecteur du faisceau d'éclairage de la route non éblouissant. Ce temps de traitement peut être particulièrement long, en comparaison à des situations de conduite dans lesquelles l'objet cible possède une dynamique de mouvement très élevée, par exemple dans le cas d'un véhicule suivi sur une route à vitesse rapide ou à rayon de courbure élevé. Il en résulte que la zone devant être non éblouissante pour une position acquise de l'objet cible se retrouve décalée par rapport à la position réelle de cet objet cible, le faisceau d'éclairage pouvant par conséquence être éblouissant.

L'invention a pour objectif de pallier à ce problème et plus précisément de proposer une solution permettant de générer une zone non-éblouissante dans un faisceau d'éclairage pour un objet cible à ne pas éblouir, lorsque l'objet cible possède une dynamique de mouvement élevée.

A cet effet, l'invention propose un procédé de commande d'un dispositif d'éclairage d'un véhicule automobile hôte pour l'émission d'un faisceau d'éclairage de la route non éblouissant pour un objet cible sur cette route ; le procédé comportant les étapes suivantes :

- acquisition par un système de capteur du véhicule automobile hôte de la position de l'objet cible sur la route à un instant donné;
- prédiction par une unité de prédiction de la position de l'objet cible sur la route à un instant futur par rapport à l'instant donné ;
- correction par l'unité de prédiction de la position acquise de l'objet cible à un instant donné en fonction de la position prédite à l'instant futur ;
- génération par le dispositif d'éclairage d'une zone non éblouissante dans un faisceau d'éclairage de la route qu'il émet en fonction de la position corrigée de l'objet cible.

Ainsi, grâce à l'invention, lorsque l'objet cible à ne pas éblouir présente une dynamique de mouvement élevée, par exemple parce qu'il se déplace à vitesse rapide ou lorsqu'il emprunte un virage à fort rayon de courbure, la zone non éblouissante dans le faisceau d'éclairage de la route est positionnée non pas sur sa position déterminée au moment de l'acquisition de l'image de la route, mais sur une position corrigée en fonction d'une prédiction de sa position à un moment ultérieur, correspondant au moment auquel ledit faisceau d'éclairage de la route est émis avec la zone non éblouissante. On compense ainsi le temps de traitement de l'image de la route et de temps contrôle du projecteur pour générer la zone none éblouissante, de sorte à ne pas éblouir l'objet cible. Avantageusement, l'étape de génération de la zone non éblouissante dans le faisceau d'éclairage de la route est donc réalisée audit instant futur.

Selon un mode de réalisation de l'invention, l'étape d'acquisition comporte une première sous-étape de détection de l'objet cible, et une deuxième sous-étape d'acquisition de la position et du type de l'objet cible. On entend par « type de l'objet cible» une catégorie d'objet susceptible d'être présent sur la route, à savoir un piéton, un vélo ou un véhicule automobile. Avantageusement, la deuxième sous-étape d'acquisition permet d'identifier si l'objet cible circule sur une voie identique ou différente de la voie sur laquelle circule le véhicule hôte et/ou si l'objet cible circule dans le même sens ou dans un sens opposé au sens de circulation du véhicule hôte.

Avantageusement, la sous-étape de détection comporte une détection des contours de l'objet cible. Le cas échéant, la sous-étape d'acquisition comporte la détermination du barycentre de ces contours, la position du barycentre étant considérée comme étant la position de l'objet cible à l'instant donné. Le type de l'objet cible peut notamment être déterminé par comparaison des contours de l'objet cible à une famille de contours prédéterminés.

En variante, la sous-étape de détection comporte une détection de sources de lumière appartenant à l'objet cible. Le cas échéant, la sous-étape d'acquisition comporte la détermination du barycentre de la position de ces sources de lumière. Le type de l'objet cible peut notamment être déterminé par comparaison du nombre de sources de lumière et de la position de ces sources de lumière à une famille de type de sources de lumière prédéterminés.

En outre, l'étape d'acquisition peut comporter une sous-étape d'acquisition de la vitesse de l'objet cible, par dérivation de sa position au cours du temps.

Avantageusement, l'étape de prédiction de la position de l'objet cible est conditionnée au fait que l'objet cible soit un véhicule automobile cible, circulant dans le même sens que le véhicule hôte et à une vitesse supérieure à une vitesse seuil. Par exemple, l'étape de prédiction n'est mise en oeuvre qui si l'objet cible est un véhicule automobile circulant sur une voie rapide, à plus de 80 km/h, et dans le même sens que le véhicule hôte. On facilite ainsi la mise en oeuvre d'une prédiction simple de la trajectoire de l'objet cible. En effet, une circulation d'un véhicule selon de tels paramètres implique l'absence de virage de type « épingle » ou de succession de virages courts, ce qui permet ainsi une modélisation simplifiée et donc rapide de la trajectoire du véhicule.

Selon un mode de réalisation de l'invention, l'étape d'acquisition de la position de l'objet cible est renouvelée périodiquement selon une période d'acquisition donnée. Il s'agit par exemple d'un traitement (mettant notamment en oeuvre les sous-étapes de détection et d'acquisition de la position et du type de l'objet cible) d'images acquises par une caméra filmant la route pour déterminer la position de l'objet cible, déterminant ainsi un nombre de positions par seconde prédéterminé PPS, notamment 30 positions/seconde.

Le cas échéant, l'instant futur de l'étape de prédiction, pour un instant d'acquisition donné est situé postérieurement à l'instant d'acquisition consécutif à cet instant d'acquisition donné, et notamment postérieurement au 5ème, voire au 10ème instant d'acquisition consécutif à cet instant d'acquisition donné. En effet, dans le cas d'une dynamique de mouvement très élevée en comparaison à un taux d'images par seconde faible et/ou une rapidité de traitement lente, l'objet cible peut s'être déplacé de façon préjudiciable entre le premier instant d'acquisition et l'instant de génération de la zone non éblouissante, du fait de la latence induite par le temps de traitement et de génération de la zone non éblouissante, qui est bien supérieure au temps d'acquisition. La correction de la position acquise via la prédiction de la position de l'objet cible audit instant futur permet ainsi de compenser ce déplacement, sans qu'il soit nécessaire d'augmenter la rapidité de traitement du système de capteur et de l'unité de contrôle du dispositif d'éclairage. Avantageusement, l'instant futur de l'étape de prédiction peut être décalé par rapport à l'instant donné de l'étape d'acquisition d'une durée calculée en fonction de la latence des étapes d'acquisition, de prédiction, de correction et de génération. On obtient de la sorte une position corrigée sensiblement proche de la position réelle de l'objet cible au moment où la zone non éblouissante est générée dans le faisceau d'éclairage.

Selon l'invention, l'étape de prédiction comporte une sous-étape de modélisation d'une trajectoire du véhicule hôte. En effet, il est possible de présumer que l'objet cible se déplace sur la route de la même façon que le véhicule hôte. C'est notamment le cas lorsque l'objet cible est un véhicule automobile suivi par le véhicule hôte. Cette hypothèse procède ainsi du fait que le véhicule suivi se trouvait, quelques instants auparavant, à la même position que le véhicule hôte, et que la trajectoire du véhicule hôte devrait permettre à ce dernier de se trouver dans la position du véhicule cible quelques instants plus tard. Par conséquent, la modélisation de la trajectoire du véhicule hôte permet de modéliser la trajectoire du véhicule cible, de sorte à pouvoir prédire sa position à un instant futur.

La trajectoire du véhicule hôte est modélisée depuis sa position à l'instant donné de l'étape d'acquisition vers la position de l'objet cible acquise à ladite étape d'acquisition.

Selon l'invention, ladite trajectoire est modélisée par un polynôme $y = f(x)$, x étant une coordonnée selon un axe X directeur du véhicule hôte et y une coordonnée selon un axe Y normal à l'axe X, le polynôme étant un polynôme de troisième degré dont les coefficients $c_0$, $c_1$, $c_2$ et $c_3$ sont déterminés en fonction de la courbure de la route, des vitesses et positions du véhicule hôte et de l'objet cible. Ce type de polynôme est notamment adapté pour modéliser la trajectoire d'un véhicule automobile, en particulier lorsque ce dernier circule sur une voie rapide, sur laquelle on observe les dynamiques de mouvement les plus élevées.

Avantageusement, la modélisation de la trajectoire comporte successivement les déterminations des coefficients des termes de degré 2, 1, 3 et 0.

Dans un exemple de réalisation de l'invention, le coefficient du terme de degré 2 est calculé en fonction de la courbure de la route et de l'empattement du véhicule hôte, étant entendu que d'autres paramètres peuvent être pris en compte dans ce calcul. Le cas échéant, la courbure de la route est obtenue au moyen de l'angle au volant du véhicule hôte à l'instant d'acquisition et du rapport de démultiplication de la direction (indiquant la relation entre la rotation du volant et le pivotement des roues directrices). Par exemple, le coefficient du terme de degré 2 est calculé au moyen de l'équation suivante : $c_2 =$ $\frac{\text{factor} \times \theta_{volant}}{2 \times E}$ où factor est le rapport de démultiplication de la direction, $\theta_{volant}$ est l'angle appliqué au volant du véhicule hôte à l'instant d'acquisition et E est l'empattement du véhicule hôte.

En variante, dans le cas où le véhicule hôte est pourvu d'un système capable de déterminer la vitesse et le lacet du véhicule hôte, le coefficient du terme de degré 2 est calculé en fonction du lacet et de la vitesse du véhicule hôte. Par exemple, le coefficient du terme de degré 2 est calculé au moyen de l'équation suivante :

$$c_2 = \frac{\dot{\theta}_{\text{hôte}}}{2 \times V_{\text{hôte}}}$$ où $\dot{\theta}_{\text{hôte}}$ est la dérivée du lacet du véhicule hôte à l'instant d'acquisition et $V_{\text{hôte}}$ est la vitesse du véhicule hôte à l'instant d'acquisition.

Ces équations dérivent notamment du fait que le coefficient du terme de degré 2 du polynôme correspond la rapidité d'évolution de la courbe du polynôme et donc à celle de la route.

Dans un exemple de réalisation de l'invention, le coefficient du terme de degré 1 du polynôme de troisième degré est nul. Ce coefficient nul est particulièrement adapté lorsque le véhicule hôte se déplace de façon colinéaire à la route, ce qui est notamment le cas lorsque le véhicule hôte ne dépasse pas, le début de la trajectoire modélisée étant ainsi linéaire.

Dans un exemple de réalisation de l'invention, le coefficient du terme de degré 3 est calculé en fonction de la position de l'objet cible, et éventuellement du lacet de l'objet cible. Le cas échéant, le lacet de l'objet cible est obtenu au moyen des vitesses de l'objet cible et du véhicule hôte, par exemple au moyen de l'équation suivante : lacet = $\dfrac{\text{atan}\left(\dfrac{V_Y}{V_X + V_{\text{hôte}}}\right)}{}$ , où $V_X$ et $V_Y$ sont les vitesses selon les axes X et Y, obtenue par dérivation des positions acquises de l'objet cible, et $V_{\text{hôte}}$ est la vitesse du véhicule hôte, obtenue par exemple au moyen d'un système de navigation du véhicule hôte et correspondant à la vitesse selon l'axe X (le véhicule hôte étant par définition dépourvu de vitesse selon l'axe Y).

Par exemple, le coefficient du terme de degré 3 est calculé au moyen de l'équation suivante :

$$c_3 = \frac{\text{atan(lacet)} - 2c_2 x_{\text{cible}}}{3x_{\text{cible}}^2}$$ , où lacet est le lacet de l'objet cible à l'instant d'acquisition, $c_2$ est le coefficient du terme de degré 2 précédemment calculé et $x_{\text{cible}}$ est la position de l'objet cible selon l'axe X.

Cet équation dérive notamment du fait que, lorsque l'objet cible n'est pas en train de dépasser, il se déplace selon une direction colinéaire à la route. Dès lors, le lacet de l'objet cible à l'instant d'acquisition est égale à la tangente de la dérivée du polynôme de troisième degré au niveau de l'objet cible à cet instant d'acquisition : $f'(x_{\text{cible}}) = \text{atan}(lacet)$.

Dans un exemple de réalisation de l'invention, le coefficient du terme de degré 0 du polynôme de troisième degré est calculé en fonction de la position de l'objet cible. Ce coefficient de degré 0 correspond au décalage de voie entre le véhicule hôte et l'objet cible. Par exemple, le coefficient du terme de degré 0 est calculé au moyen de l'équation suivante :

$$c_0 = y_{cible} - c_2 x_{cible}^2 - c_3 x_{cible}^3$$ , où $x_{\text{cible}}$ est la position de l'objet cible selon l'axe X et $y_{\text{cible}}$ est la position de l'objet cible selon l'axe Y.

Avantageusement, l'étape de prédiction peut comporter une sous-étape d'extrapolation de la trajectoire modélisée jusqu'à l'instant futur pour obtenir la position prédite de l'objet cible à cet instant futur. En effet, une fois la trajectoire modélisée depuis la position du véhicule hôte vers la position de l'objet cible à l'instant d'acquisition, on est capable de prolonger cette trajectoire modélisée au-delà de cet instant d'acquisition pour obtenir la position de l'objet cible audit instant futur. Par exemple, on estime la position de l'objet cible selon l'axe X à l'instant futur à l'aide de la position et de la vitesse de l'objet cible à l'instant d'acquisition : $x_{cible\_futur} = x_{cible} + V_{cible}t_{futur}$ et on estime la position de l'objet cible selon l'axe Y à l'instant futur à l'aide du polynôme de troisième degré : $y_{cible\_futur} = c_0 + c_2 x_{cible\_futur}^2 + c_3 x_{cible\_futur}^3$ .

Avantageusement, l'étape de correction peut consister à remplacer la position acquise par la position prédite.

En variante, l'étape de correction peut comprendre le remplacement de la position acquise par une paire de positions, correspondant aux positions des bords gauche et droit de l'objet cible dans la position prédite. Ces positions des bords gauche et droit peuvent par exemple être déterminées à l'aide du gabarit de l'objet cible, obtenu le cas échéant lors de l'étape d'acquisition.

Dans un mode de réalisation, l'étape de prédiction peut comporter une sous-étape d'extrapolation de la trajectoire modélisée jusqu'à un premier instant futur et jusqu'à un deuxième instant futur pour obtenir des première et deuxième positions prédites de l'objet cible à ces instants futurs, les premier et deuxième instants futurs correspondant à un décalage de l'instant donné par les latences respectivement minimum et maximum des étapes d'acquisition, de prédiction et de correction.

Le cas échéant, l'étape de correction peut comprendre le remplacement de la position acquise par une paire de positions, dans laquelle :

- l'une des positions correspond à la position la plus à gauche des positions des bords gauches dans les première et deuxième positions prédites,
- l'autre des positions correspond à la position la plus à droite des positions des bords droits dans les première et deuxième positions prédites.

Selon un mode de réalisation de l'invention, le faisceau d'éclairage de la route émis par le dispositif d'éclairage est un faisceau pixélisé. Le cas échéant, l'étape de génération d'une zone non éblouissante consiste en l'allumage et/ou l'extinction et/ou la modification de l'intensité d'une pluralité de pixels de ce faisceau pixélisé en fonction de la position corrigée.

Avantageusement, l'étape de génération d'une zone non éblouissante peut consister en l'extinction d'une pluralité de pixels du faisceau pixélisé pour former une zone sombre autour de l'objet cible dans la position corrigée. Le cas échéant, la zone sombre s'étend entre la première et la deuxième position de la paire de positions déterminées lors de l'étape de correction.

L'invention a également pour objet un système d'éclairage pour véhicule automobile, comprenant :

- Un système de capteur apte à acquérir la position d'un objet cible sur la route à un instant donné ;
- Une unité de prédiction apte à prédire la position de l'objet cible sur la route à un instant futur par rapport à l'instant donnée et à corriger la position acquise en fonction de la position prédite ;
- Un dispositif d'éclairage apte à émettre un faisceau d'éclairage de la route et à générer une zone non éblouissante dans ce faisceau en fonction de la position corrigée de l'objet cible.

Le système d'éclairage est avantageusement agencé pour mettre en oeuvre un procédé de commande conforme à l'invention.

De préférence, le dispositif d'éclairage est agencé pour émettre un faisceau pixélisé formant ledit faisceau d'éclairage de la route et comporte a cet effet une unité de contrôle capable d'allumer et/ou d'éteindre et/ou de modifier l'intensité lumineuse de chacun des pixels du faisceau pixélisé.

Avantageusement, le dispositif d'éclairage peut comporter un ou plusieurs modules lumineux agencé(s), le module ou l'ensemble des modules étant agencé pour émettre ledit faisceau pixélisé.

Selon un mode de réalisation, le ou chaque module lumineux peut être agencé pour que le faisceau pixélisé présente au moins 400 pixels, voire au moins 1000 pixels, voire au moins 2000 pixels. Ce faisceau pixélisé peut par exemple comporter 20 colonnes et 20 lignes de pixels, notamment 32 colonnes et 32 lignes de pixels.

Avantageusement, le module peut être agencé pour que chaque pixel du faisceau pixélisé présente une largeur et/ou une longueur inférieure à 1° notamment inférieure à 0,5°, voire inférieure à 0,3°.

Avantageusement encore, le module lumineux peut être agencé pour que le faisceau pixélisé présente une amplitude verticale d'au moins 5°, notamment d'au moins 9°, et une amplitude horizontale d'au moins 5°, notamment d'au moins 12°.

Le module lumineux peut par exemple comporter :

- une source lumineuse pixélisée comportant une pluralité d'émetteurs élémentaires agencés en matrice, chacun des émetteurs élémentaires étant activable sélectivement pour émettre un faisceau lumineux élémentaire ; et

- un élément optique de projection associé à ladite source lumineuse pixélisée pour projeter chacun desdits faisceaux lumineux élémentaires sous la forme d'un pixel, l'ensemble des pixels formant ledit faisceau pixélisé.

Avantageusement, l'élément optique de projection est agencée de sorte à ce que le faisceau pixélisé présente une amplitude verticale d'au moins 5° et une amplitude horizontale d'au moins 5°. Ces amplitudes horizontale et verticale permettent d'assurer que le faisceau pixélisé soit projeté sur une zone de la route suffisamment vaste pour réaliser des fonctions d'éclairage de type éclairage de la route non éblouissant. L'élément optique de projection peut ainsi comprendre l'un ou une combinaison de plusieurs des composants optiques suivants : lentille, réflecteur, guide, collimateur, prisme.

Le cas échéant, la source lumineuse pixélisée peut comporter au moins 20 colonnes et au moins 20 lignes d'émetteurs élémentaires, notamment au moins 32 lignes et colonnes d'émetteurs élémentaires. Ces nombres de colonnes et de lignes minimales d'émetteurs élémentaires, en combinaison avec les amplitudes verticale et horizontale précédemment mentionnées permettent d'obtenir, pour chacun des faisceaux lumineux élémentaires, une fois projeté par l'élément optique de projection, une ouverture angulaire inférieure à 0,5°, voire inférieure à 0,3°. De la sorte, on obtient une résolution minimale du faisceau pixélisé lorsqu'il est projeté sur la route telle qu'on garantie une définition optimale de la zone non éblouissante de sorte à maximiser l'éclairage de la route sans éblouir l'objet cible. Avantageusement, les émetteurs élémentaires et l'élément optique de projection sont agencés de sorte à ce que deux pixels voisins, c'est-à-dire deux pixels adjacents sur une même ligne ou sur une même colonne, soient contigus, c'est-à-dire que leurs bords adjacents soient confondus.

Dans un mode de réalisation de l'invention, la source lumineuse pixélisée du premier module comprend au moins une matrice d'éléments électroluminescents (appelée en anglais monolithic array) agencés selon au moins deux colonnes par au moins deux lignes. De préférence, la source électroluminescente comprend au moins une matrice de matrice d'éléments électroluminescents monolithique, aussi appelée matrice monolithique.

Dans une matrice monolithique, les éléments électroluminescents sont crûs depuis un substrat commun et sont connectés électriquement de manière à être activables sélectivement, individuellement ou par sousensemble d'éléments électroluminescents. Ainsi chaque élément électroluminescent ou groupe d'éléments électroluminescents peut former l'un des émetteurs élémentaires de ladite source lumineuse pixélisée qui peut émettre de la lumière lorsque son ou leur matériau est alimenté en électricité

Différents agencements d'éléments électroluminescents peuvent répondre à cette définition de matrice monolithique, dès lors que les éléments électroluminescents présentent l'une de leurs dimensions principales d'allongement sensiblement perpendiculaire à un substrat commun et que l'écartement entre les émetteurs élémentaires, formés par un ou plusieurs éléments électroluminescents regroupés ensemble électriquement, est faible en comparaison des écartements imposés dans des agencements connus de chips carrés plates soudés sur une carte de circuits imprimés.

Le substrat peut être majoritairement en matériau semi-conducteur. Le substrat peut comporter un ou plusieurs autres matériaux, par exemple non semi-conducteurs.

Ces éléments électroluminescents, de dimensions submillimétriques, sont par exemple agencés en saillie du substrat de manière à former des bâtonnets de section hexagonale. Les bâtonnets électroluminescents prennent naissance sur une première face d'un substrat. Chaque bâtonnet électroluminescent, ici formé par utilisation de nitrure de gallium (GaN), s'étend perpendiculairement, ou sensiblement perpendiculairement, en saillie du substrat, ici réalisé à base de silicium, d'autres matériaux comme du carbure de silicium pouvant être utilisés sans sortir du contexte de l'invention. A titre d'exemple, les bâtonnets électroluminescents pourraient être réalisés à partir d'un alliage de nitrure d'aluminium et de nitrure de gallium (AIGaN), ou à partir d'un alliage de phosphures d'aluminium, d'indium et de gallium (AIIn-GaP). Chaque bâtonnet électroluminescent s'étend selon un axe d'allongement définissant sa hauteur, la base de chaque bâtonnet étant disposée dans un plan de la face supérieure du substrat.

Les bâtonnets électroluminescents d'une même matrice monolithique présentent avantageusement la même forme et les mêmes dimensions. Ils sont chacun délimités par une face terminale et par une paroi circonférentielle qui s'étend le long de l'axe d'allongement du bâtonnet. Lorsque les bâtonnets électroluminescents sont dopés et font l'objet d'une polarisation, la lumière résultante en sortie de la source à semi-conducteurs est émise essentiellement à partir de la paroi circonférentielle, étant entendu que des rayons lumineux peuvent sortir également de la face terminale. Il en résulte que chaque bâtonnet électroluminescent agit comme une unique diode électroluminescente et que la luminance de cette source est améliorée d'une part par la densité des bâtonnets électroluminescents présents et d'autre part par la taille de la surface éclairante définie par la paroi circonférentielle et qui s'étend donc sur tout le pourtour, et toute la hauteur, du bâtonnet. La hauteur d'un bâtonnet peut être comprise entre 2 et 10 $\mu$m, préférentiellement 8 $\mu$m; la plus grande dimension de la face terminale d'un bâtonnet est inférieure à 2 $\mu$m, préférentiellement inférieure ou égale à 1 $\mu$m.

On comprend que, lors de la formation des bâtonnets électroluminescents, la hauteur peut être modifiée d'une zone de la source lumineuse pixélisée à l'autre, de manière à accroître la luminance de la zone correspondante lorsque la hauteur moyenne des bâtonnets la constituant est augmentée. Ainsi, un groupe de bâtonnets électroluminescents peut avoir une hauteur, ou des hauteurs, différentes d'un autre groupe de bâtonnets électroluminescents, ces deux groupes étant constitutifs de la même source lumineuse à semi-conducteur comprenant des bâtonnets électroluminescents de dimensions submillimétriques. La forme des bâtonnets électroluminescents peut également varier d'une matrice monolithique à l'autre, notamment sur la section des bâtonnets et sur la forme de la face terminale. Les bâtonnets présentent une forme générale cylindrique, et ils peuvent notamment présenter une forme de section polygonale, et plus particulièrement hexagonale. On comprend qu'il importe que de la lumière puisse être émise à travers la paroi circonférentielle, que celle-ci présente une forme polygonale ou circulaire.

Par ailleurs, la face terminale peut présenter une forme sensiblement plane et perpendiculaire à la paroi circonférentielle, de sorte qu'elle s'étend sensiblement parallèlement à la face supérieure du substrat, ou bien elle peut présenter une forme bombée ou en pointe en son centre, de manière à multiplier les directions d'émission de la lumière sortant de cette face terminale.

Les bâtonnets électroluminescents sont agencés en matrice à deux dimensions. Cet agencement pourrait être tel que les bâtonnets soient agencés en quinconce. De manière générale, les bâtonnets sont disposés à intervalles réguliers sur le substrat et la distance de séparation de deux bâtonnets électroluminescents immédiatement adjacents, dans chacune des dimensions de la matrice, doit être au minimum égale à 2 $\mu$m, préférentiellement compris entre 3 $\mu$m et 10 $\mu$m, afin que la lumière émise par la paroi circonférentielle de chaque bâtonnet puisse sortir de la matrice de bâtonnets électroluminescents. Par ailleurs, on prévoit que ces distances de séparation, mesurées entre deux axes d'allongement de bâtonnets adjacents, ne soient pas supérieures à 100 $\mu$m.

Selon un autre mode de réalisation, la matrice monolithique peut comporter des éléments électroluminescents formés par des couches d'éléments électroluminescents épitaxiées, notamment une première couche en GaN dopée n et une seconde couche en GaN dopée p, sur un substrat unique, par exemple en carbure de silicium, et que l'on découpe (par meulage et/ou ablation) pour former une pluralité d'émetteurs élémentaires respectivement issus d'un même substrat. Il résulte d'une telle conception une pluralité de blocs électroluminescents tous issus d'un même substrat et connectés électriquement pour être activables sélectivement les uns des autres.

Dans un exemple de réalisation selon cet autre mode, le substrat de la matrice monolithique peut présenter une épaisseur comprise entre 100 $\mu$m et 800 $\mu$m, notamment égale à 200 $\mu$m ; chaque bloc peut présenter une largeur et largeur, chacune étant comprise entre 50

μm et 500 μm, préférentiellement comprise entre 100 μm et 200 μm. Dans une variante, la longueur et la largeur sont égales. La hauteur de chaque bloc est inférieur à 500 μm, préférentiellement inférieur à 300 μm. Enfin la surface de sortie de chaque bloc peut être faite via le substrat du côté opposée à l'épitaxie. La distance de séparation entre deux émetteurs élémentaires. La distance entre chaque émetteur élémentaires contigü peut être inférieure à 1 μm, notamment inférieure à 500 μm, et elle est préférentiellement inférieure à 200 μm.

Selon un autre mode de réalisation non représenté, aussi bien avec des bâtonnets électroluminescents s'étendant respectivement en saillie d'un même substrat, tels que décrit ci-dessus, qu'avec des blocs électroluminescents obtenus par découpage de couches électroluminescentes superposées sur un même substrat, la matrice monolithique peut comporter en outre une couche d'un matériau polymère dans laquelle les éléments électroluminescents sont au moins partiellement noyés. La couche peut ainsi s'étendre sur toute l'étendue du substrat ou seulement autour d'un groupe déterminé d'éléments électroluminescents. Le matériau polymère, qui peut notamment être à base de silicone, crée une couche protectrice qui permet de protéger les éléments électroluminescents sans gêner la diffusion des rayons lumineux. En outre, il est possible d'intégrer dans cette couche de matériau polymère des moyens de conversion de longueur d'onde, et par exemple des luminophores, aptes à absorber au moins une partie des rayons émis par l'un des éléments et à convertir au moins une partie de ladite lumière d'excitation absorbée en une lumière d'émission ayant une longueur d'onde différente de celle de la lumière d'excitation. On pourra prévoir indifféremment que les luminophores sont noyés dans la masse du matériau polymère, ou bien qu'ils sont disposés en surface de la couche de ce matériau polymère.

La source lumineuse pixélisée peut comporter en outre un revêtement de matériau réfléchissant pour dévier les rayons lumineux vers les surfaces de sorties de la source lumineuse.

Les éléments électroluminescents de dimensions submillimétriques définissent dans un plan, sensiblement parallèle au substrat, une surface de sortie déterminée. On comprend que la forme de cette surface de sortie est définie en fonction du nombre et de l'agencement des éléments électroluminescents qui la composent. On peut ainsi définir une forme sensiblement rectangulaire de la surface d'émission, étant entendu que celle-ci peut varier et prendre n'importe quelle forme sans sortir du contexte de l'invention.

La ou les matrices monolithiques aptes à émettre des rayons lumineux peuvent être couplées à l'unité de contrôle. L'unité de contrôle peut être montée sur une ou plusieurs des matrices, l'ensemble formant ainsi un sous-module lumineux. Dans ce cas, l'unité de contrôle peut comporter une unité centrale de traitement couplée avec une mémoire sur laquelle est stockée un programme d'ordinateur qui comprend des instructions permettant au processeur de réaliser des étapes générant des signaux permettant le contrôle de la source lumineuse. L'unité de contrôle peut être un circuit intégré, par exemple un ASIC (acronyme de l'anglais « Application-Specific Integrated Circuit ») ou un ASSP (acronyme de l'anglais « Application Spécifie Standard Product »).

En variante, la source lumineuse pixélisée peut être formé par l'ensemble d'au moins une source de lumière formée d'au moins une diode électroluminescente émettant de la lumière et d'une matrice d'éléments optoélectroniques, et par exemple une matrice de micro-miroirs (également connue sous l'acronyme DMD, pour l'anglais Digital Micromirror Device) qui dirige les rayons lumineux issus de ladite au moins une source de lumière par réflexion vers l'élément optique de projection. Le cas échéant, un élément optique de collection permet de collecter les rayons de la au moins une source de lumière afin de les concentrer et les diriger vers la surface de la matrice de micro-miroirs. Chaque micro miroir peut pivoter entre deux positions fixes, une première position dans laquelle les rayons lumineux sont réfléchis vers l'élément optique de projection, et une deuxième position dans laquelle les rayons lumineux sont réfléchis dans une direction différente de l'élément optique de projection. Les deux positions fixes sont orientées de la même manière pour tous les micro-miroirs et forment par rapport à un plan de référence support de la matrice de micro miroirs un angle caractéristique de la matrice de micro-miroirs, défini dans ses spécifications. Cet angle est généralement inférieur à 20° et vaut usuellement environ 12°. Ainsi, chaque micro-miroir réfléchissant une petite partie des rayons lumineux incidents sur la matrice de micro-miroir forme un émetteur élémentaire de la source lumineuse pixélisée, l'actionnement et le pilotage du changement de position permet d'activer sélectivement cet émetteur élémentaire pour émettre ou non un faisceau lumineux élémentaire. Le cas échéant, l'unité de contrôle est agencée pour contrôler l'actionnement et le pilotage du changement de position de chaque micro-miroir.

En variante encore, la source lumineuse pixélisée peut être formée par un système à balayage laser dans lequel une source laser émet un faisceau laser vers des moyens de balayage configurés pour balayer avec le faisceau laser la surface d'un élément convertisseur de longueur d'ondes, surface qui est imagée par l'élément optique de projection. Le balayage du faisceau est accompli par les moyens de balayage à une vitesse suffisamment grande pour que l'oeil humain ne perçoive pas son déplacement dans l'image projetée. Le pilotage synchronisé de l'allumage de la source laser et du mouvement de balayage du faisceau permet de générer une matrice d'émetteurs élémentaires activables sélectivement au niveau de la surface de l'élément convertisseur de longueur d'onde. Le cas échéant, l'unité de contrôle est agencée pour contrôler de façon synchrone l'allumage de la source laser et le mouvement de balayage du faisceau. Ici, les moyens de balayage sont un micro-miroir mobile, permettant de balayer la surface de l'élément convertisseur de longueur d'ondes par réflexion du faisceau laser. Les micro-miroirs mentionnés comme moyen de balayage sont par exemple de type MEMS (pour « Micro-Electro-Mechanical Systems » en anglais ou microsystème électromécanique). Cependant, l'invention n'est nullement limitée à ce moyen de balayage et peut utiliser d'autres sortes de moyens de balayage, telle une série de miroirs agencés sur un élément rotatif, la rotation de l'élément engendrant un balayage de la surface de transmission par le faisceau laser

L'invention a également pour objet un moyen de stockage d'information, ce moyen de stockage mémorisant un ou plusieurs programmes dont l'exécution autorise une mise en oeuvre du procédé selon l'invention. Le cas échéant, le moyen de stockage d'information comprend une mémoire volatile et/ou une mémoire non-volatile et/ou un disque dur et/ou une disquette et/ou un CD-ROM.

L'invention a également pour objet un programme d'ordinateur sur un moyen de stockage d'information, comportant une ou plusieurs séquences d'instructions exécutables par un microprocesseur et/ou un ordinateur, l'exécution desdites séquences d'instructions autorisant une mise en oeuvre du procédé selon l'invention.

D'autres caractéristiques et avantages de la présente invention seront mieux compris à l'aide de la description des exemples et des dessins parmi lesquels :

- les figures 1A et 1B montrent un exemple de procédé de commande d'un dispositif d'éclairage tel que connu dans l'art antérieur ;
- les figures 2A et 2B montrent un exemple de procédé de commande d'un dispositif d'éclairage selon l'invention ;
- la figure 3 montre un exemple de méthode de prédiction d'une trajectoire du procédé décrit en figure 2B ; et
- la figure 4 montre un exemple de système d'éclairage mettant en oeuvre dans le procédé de la figure 2B.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre d'exemples et de manière non limitative.

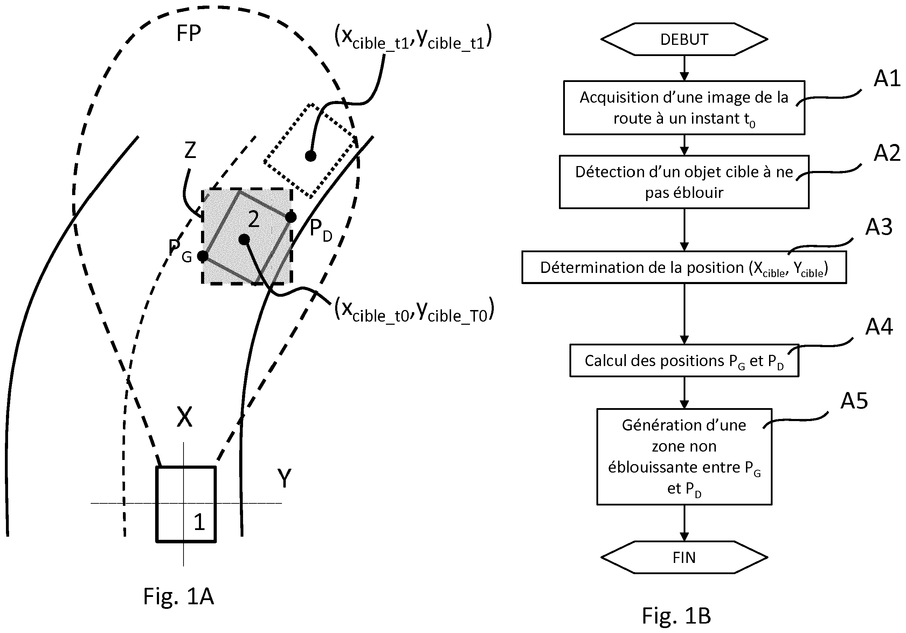

On a représenté en figure 1A schématiquement une vue de dessus d'une scène de route dans laquelle un véhicule hôte 1 suit un véhicule cible 2.

Le véhicule hôte 1 est équipé d'un système d'éclairage comportant des projecteurs capables d'émettre un faisceau d'éclairage de la route pixélisé FP, une unité de contrôle capable d'allumer et/ou d'éteindre et/ou de modifier l'intensité lumineuse de chacun des pixels du faisceau, et un système de capteur pour détecter un objet cible sur la route à ne pas éblouir et mesurer la position de cet objet.

Afin d'éclairer de façon optimale la route et sans éblouir d'autres utilisateurs de cette route, le système d'éclairage met en oeuvre le procédé connu représenté en figure 1B.

L'étape A1 correspond à une acquisition d'une image de la scène de route par le système de capteur à un instant $t_0$ et l'étape A2 correspond à la détection du véhicule cible 2 dans cette scène de route. A l'étape A3, la position ($X_{cible}$, $Y_{cible}$) du véhicule cible 2 à l'instant $t_0$ est calculée et on détermine par la suite, dans l'étape A4, des positions $P_G$ et $P_D$ correspondant aux positions des bords gauche et droit du véhicule cible 2 à l'instant t0. Ces positions des bords gauche et droit sont ensuite fournies, dans une étape A5, à l'unité de contrôle qui contrôle l'allumage et l'extinction des pixels du faisceau d'éclairage pour générer une zone non éblouissante Z dans le faisceau entre ces deux positions $P_G$ et $P_D$.

On constate aisément, au vu de la figure 1A, que ces positions $P_G$ et $P_D$ ont été déterminées en fonction de l'image de la scène de route telle qu'elle a été acquise à l'instant t0. Toutefois, l'ensemble des étapes A2 à A5 nécessite un temps de calcul non négligeable, de l'ordre de 150ms, ce qui génère une latence entre l'instant d'acquisition t0 et l'instant de génération t1 de la zone non éblouissante Z.

Or, dans le cas où le véhicule cible 2 possède une dynamique de mouvement très élevée, comme dans le cas de la figure 1a où la route possède un rayon de courbure élevé, la position du véhicule cible 2 à l'instant t1 ($X_{cible\_t1}$, $Y_{cible\_t1}$) est suffisamment éloignée de sa position à l'instant t0 ($X_{cible\_t0}$, $Y_{cible\_t0}$) pour que la zone non éblouissante Z ne soit plus centrée sur le véhicule cible 2 à l'instant t1. Le faisceau d'éclairage FP devient par conséquent éblouissant pour le véhicule cible 2 à l'instant t1, malgré la présence de la zone non éblouissante Z.

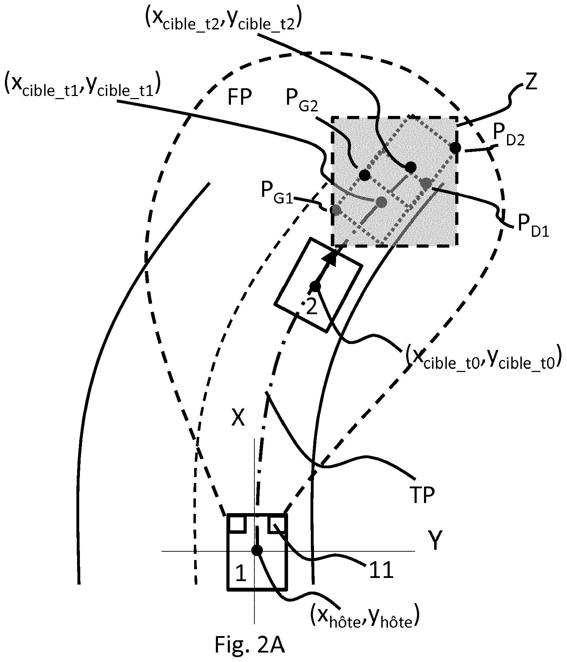

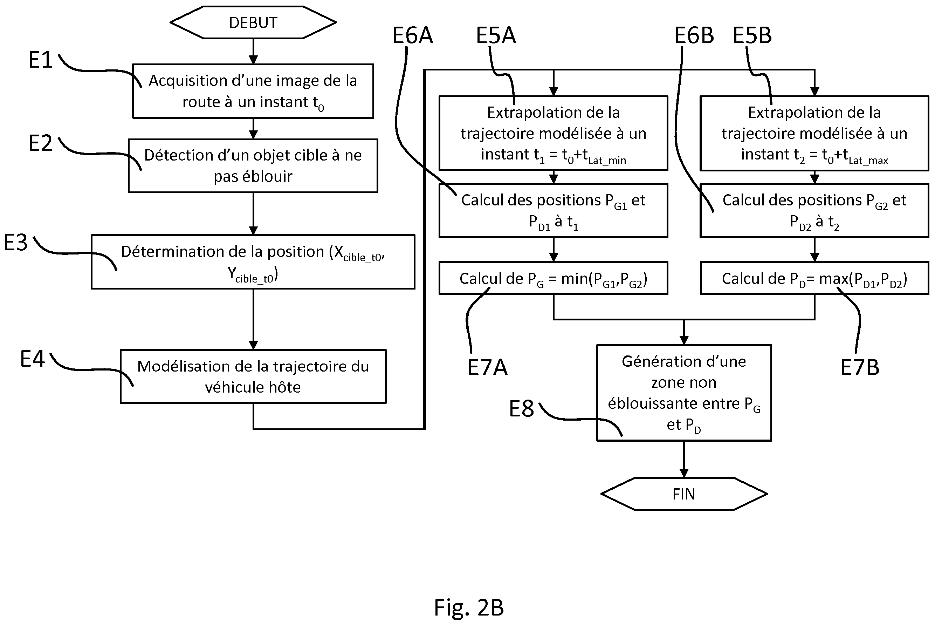

On a ainsi représenté en figure 2A schématiquement une vue de dessus d'une scène de route dans laquelle un véhicule hôte 1 suit un véhicule cible 2, le véhicule hôte étant équipé d'un système d'éclairage selon l'invention et mettant en oeuvre un procédé pour l'émission d'un faisceau d'éclairage de la route non éblouissant pour le véhicule 2 selon l'invention représenté en figure 2B.

A cet effet, le véhicule hôte 1 comporte un système d'éclairage 11 comprenant un système de capteur apte à acquérir la position du véhicule cible 2 sur la route à un instant donné t0. Il s'agit par exemple d'une caméra filmant la scène de route dans une étape d'acquisition E1 et associée à une unité de traitement des images fournies par la caméra pour détecter la présence du véhicule cible 2 dans une étape de détection E2 et en estimer la position ($X_{cible\_t0}$, $Y_{cible\_t0}$) à un instant t0 donné dans une étape d'acquisition E3. Par exemple, l'unité de traitement peut mettre en oeuvre à l'étape E2 des méthodes de détection des contours du véhicule cible et à l'étape E3 des méthodes de détermination du barycentre de ces contours. En variante, l'unité de traitement peut mettre en oeuvre à l'étape E2 des méthodes de détection de sources de lumière appartenant au véhicule cible et à l'étape E3 des méthodes de détermination du barycentre de la position de ces sources de lumière. Dans ces deux méthodes, la position du barycentre est considérée comme étant la position ($X_{cible\_t0}$, $Y_{cible\_t0}$) du véhicule cible à l'instant donné t0.

Le système d'éclairage 11 est également pourvu d'une une unité de prédiction apte à prédire la position du véhicule cible 2 sur la route à un instant futur.

Afin de prédire la position du véhicule cible 2, l'unité de prédiction est apte à mettre en oeuvre dans une étape de modélisation E4 une modélisation d'une trajectoire TP du véhicule hôte 1.

En effet, le véhicule cible 2 se déplace sur la route de la même façon que le véhicule hôte 1. Dés lors, le véhicule cible 2 se trouvait, quelques instants auparavant à l'instant t0, à la même position que le véhicule hôte 1. On comprend donc que la trajectoire du véhicule hôte 1 devrait permettre à ce dernier de se trouver dans la position du véhicule cible 2 à un instant ultérieur. Par conséquent, la modélisation de la trajectoire TP du véhicule hôte 1 permet de modéliser la trajectoire du véhicule cible 2, de sorte à pouvoir prédire sa position à un instant futur t1 ou t2.

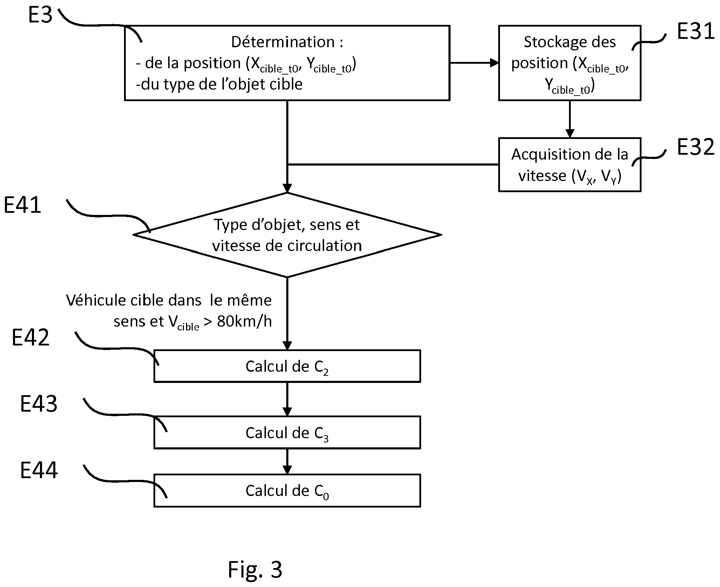

Une méthode de modélisation de la trajectoire TP selon l'invention sera détaillée ultérieurement à la figure 3. Cette trajectoire TP est dans l'exemple décrit modélisée par une équation du type $y = f(x)$, où x étant une coordonnée selon un axe X directeur du véhicule hôte et y une coordonnée selon un axe Y normal à l'axe X.

Par ailleurs, l'unité de prédiction est apte à mettre en oeuvre dans une étape d'extrapolation E5 une extrapolation de la trajectoire modélisée TP jusqu'à un ou plusieurs instants futurs pour obtenir la position prédite du véhicule cible 2 à cet instant futur. Ce type d'extrapolation peut par exemple consister en une prolongation de la trajectoire modélisée au-delà la position du véhicule cible 2 à l'instant d'acquisition t0 pour obtenir sa position audit instant futur. Par exemple, on peut estimer la position du véhicule cible 2 selon l'axe X audit l'instant futur à l'aide de sa position et de sa vitesse à l'instant d'acquisition t0 (cette vitesse pouvant par exemple être obtenue par dérivation des positions du véhicule cible 2 successivement acquises par l'unité d'acquisition). Cette position selon l'axe X peut ainsi être obtenue via l'équation : $x_{cible\_futur} = x_{cible} + V_{cible}t_{futur}$. Cette position selon l'axe X permet ensuite d'obtenir la position selon l'axe Y du véhicule cible 2, en utilisation l'équation modélisant la trajectoire TP.

Dans la méthode présentée en figure 2B, l'unité de prédiction extrapole dans une étape E5A la trajectoire modélisée TP jusqu'à un premier instant futur t1, qui correspond à la latence minimale des étapes décrite en figure 2B, c'est-à-dire des étapes d'acquisition E1, E2 et E3, de prédiction E4 et E5 et de correction E6 et E7, pour obtenir la position prédite du véhicule cible ($X_{cible\_t1}$, $Y_{cible\_t1}$) à cet instant futur t1.

En outre, l'unité de prédiction remplace, dans une étape de correction E6A, la position acquise ($X_{cible\_t0}$, $Y_{cible\_t0}$) par une paire de positions $P_{G1}$ et $P_{D1}$, qui correspondent aux positions des bords gauche et droit du véhicule cible 2 (vu depuis le véhicule hôte 1) dans la position prédite ($X_{cible\_t1}$, $Y_{cible\_t1}$).

Ces positions des bords gauche et droit sont obtenues dans cet exemple à l'aide du gabarit du véhicule cible 2, qui a été préalablement estimée à l'étape E2 (via la détection des contours ou des sources de lumière du véhicule cible 2), et du lacet de ce véhicule cible 2, ce lacet étant par exemple obtenue par l'équation suivante: lacet = $\mathrm{atan}\left(\dfrac{V_Y}{V_X + V_{hôte}}\right)$, où $V_X$ et $V_Y$ sont les vitesses du véhicule cible 2 selon les axes X et Y, et $V_{hôte}$ est la vitesse du véhicule hôte 1, obtenue par exemple au moyen d'un système de navigation du véhicule hôte.

L'unité de prédiction extrapole dans une étape E5B la trajectoire modélisée TP jusqu'à un deuxième instant futur t2, qui correspond à la latence maximale de ces même étapes E1 à E7, pour obtenir la position prédite du véhicule cible ($X_{cible\_t2}$, $Y_{cible\_t2}$) à cet instant futur t2. L'unité de prédiction remplace également, dans une étape de correction E6B, la position acquise ($X_{cible\_t0}$, $Y_{cible\_t0}$) par une paire de positions $P_{G2}$ et $P_{D2}$, qui correspondent aux positions des bords gauche et droit du véhicule cible 2 dans la position prédite ($X_{cible\_t2}$, $Y_{cible\_t2}$).

La latence du système n'étant pas une valeur constante, on obtient ainsi deux paires de positions correspondant aux positions minimale et maximale auxquelles peut se retrouver le véhicule cible 2.

Afin de garantir que l'émission du faisceau d'éclairage FP pourvu d'une zone non-éblouissante Z pour le véhicule cible 2, quelque soit la latence du système d'éclairage à l'instant t0, l'unité de prédiction procède ensuite, dans une étape de correction E7A, à un calcul de la position $P_G$ la plus à gauche entre les positions des bords gauches $P_{G1}$ et $P_{G2}$ : min($P_{G1}$,$P_{G2}$) ,et, dans une étape de correction E7B, à un calcul de la position $P_D$ la plus à droite entre les positions des bords droits $P_{D1}$ et $P_{D2}$ : max($P_{D1}$,$P_{D2}$). On comprend donc qu'on obtient une zone délimitée à droite et à gauche par les positions extrêmes que peut prendre le véhicule cible 2, en fonction de la variance de la latence du système d'éclairage.

Dans un autre mode de réalisation non représenté, l'unité de prédiction pourrait seulement extrapoler la trajectoire modélisée TP jusqu'à un unique instant futur, correspondant à la latence moyenne du système d'éclairage, pour obtenir la position prédite du véhicule cible à cet instant futur, et remplacer cette position par une paire de positions correspondant aux positions des bords gauche et droit du véhicule cible dans cette position prédite.

Enfin, le système d'éclairage 11 est également pourvu d'un dispositif d'éclairage apte à émettre le faisceau d'éclairage de la route pixélisé FP et à générer une zone non éblouissante Z dans ce faisceau en fonction de la position corrigée de l'objet cible, à savoir la paire de position $P_G$ et $P_D$. Le dispositif d'éclairage comporte à cet effet un ou plusieurs modules lumineux agencé(s) pour émettre ledit faisceau pixélisé et une unité de contrôle capable d'allumer et/ou d'éteindre et/ou de modifier l'intensité lumineuse de chacun des pixels du faisceau pixélisé.

Dans une étape de génération E8, l'unité de contrôle du dispositif d'éclairage commande l'extinction d'une pluralité de pixels du faisceau pixélisé FP pour générer la zone non éblouissante Z entre les positions $P_G$ et $P_D$. Cette étape de génération E8 est mise en oeuvre à un instant ultérieur à l'instant d'acquisition t0, correspondant au décalage de cet instant t0 par la latence du système d'éclairage 11.

Ainsi, grâce au système d'éclairage 11 et au procédé selon le mode de réalisation représenté, la zone non éblouissante Z dans le faisceau d'éclairage de la route FP est ainsi positionnée non pas sur la position $(X_{cible\_t0}, Y_{cible\_t0})$ déterminée au moment de l'acquisition de l'image de la route, mais bien sur une position corrigée en fonction d'une prédiction de sa position à un moment ultérieur, correspondant au moment auquel ledit faisceau d'éclairage de la route FP est émis avec la zone non éblouissante Z.

On a représenté en figure 3 un exemple de méthode de modélisation de la trajectoire TP du véhicule hôte 2 mis en oeuvre par l'unité de prédiction du système d'éclairage 11 de la figure 2A.

Dans cet exemple, on modélise la trajectoire permettant au véhicule hôte 1 de se déplacer depuis sa position $(X_{hôte}, Y_{hôte})$ à la position du véhicule cible 2 à l'instant t0 : $(X_{cible\_t0}, Y_{cible\_t0})$. A cet effet, il est nécessaire que l'unité de traitement du système de capteurs détermine, lors de l'étape E3, en sus de la position $(X_{cible\_t0}, Y_{cible\_t0})$ le type de l'objet cible 2. Il s'agit ici de déterminer la catégorie d'objet susceptible d'être présent sur la route, à savoir un piéton, un vélo ou un véhicule automobile, auquel appartient l'objet cible 2. Le type de l'objet cible 2 est dans le cas présent déterminer par comparaison des contours de l'objet cible 2 à une famille de contours prédéterminés correspondant à des catégories d'objet.

On notera également que l'unité de traitement met en oeuvre une étape E31 de stockage des positions successivement acquises $(X_{cible\_t0}, Y_{cible\_t0})$ et une étape E32 de dérivation de ces positions acquises afin d'obtenir les vitesses $(V_X, V_Y)$ de l'objet cible. Ces vitesses permettent notamment d'identifier si l'objet cible 2 circule dans le même sens ou dans un sens opposé au sens de circulation du véhicule hôte 1.

Lors de l'étape de modélisation E4 de la trajectoire TP, on cherche à définir un polynôme y=f(x), x étant une coordonnée du véhicule hôte 1 circulant sur la trajectoire TP selon un axe X directeur du véhicule hôte et y une coordonnée du véhicule hôte 1 circulant sur la trajectoire TP selon un axe Y normal à l'axe X. Dans le cas présent, le polynôme est un polynôme de troisième degré dont les coefficients $c_0$, $c_1$, $c_2$ et $c_3$.

Afin de faciliter le calcul de ces coefficients, la modélisation est conditionnée, lors d'une étape E41 conditionnée au fait que l'objet cible 2 soit un véhicule automobile, circulant dans le même sens que le véhicule hôte 1 et à une vitesse $V_{cible}$ supérieure à une vitesse seuil, dans le cas présent 80 km/h.

Dans le cas où ces conditions sont respectées, l'unité de prédiction met en oeuvre une première étape E42 de détermination du coefficient du terme de degré 2 $C_2$. Ce coefficient est par exemple déterminé au moyen de l'angle au volant $\theta_{volant}$ du véhicule hôte 1 à l'instant d'acquisition t0, du rapport de démultiplication factor de la direction du véhicule hôte 1 et de l'empattement E du véhicule hôte, via l'équation: $c_2 = \dfrac{factor \times \theta_{volant}}{2 \times E}$ . En variante, dans le cas où le véhicule hôte est pourvu d'une unité de navigation capable de déterminer la vitesse $V_{hôte}$ et le lacet $\dot{\theta}_{hôte}$ du véhicule hôte, le coefficient du terme de degré 2 peut être calculé au moyen de l'équation suivante : $c_2 = \dfrac{\dot{\theta}_{hôte}}{2 \times V_{hôte}}$ .

L'unité de prédiction met ensuite en oeuvre une deuxième étape E43 de détermination du coefficient du terme de degré 3. Ce coefficient est par exemple calculé en fonction de la position du véhicule cible 2, de son lacet et du coefficient du terme de degré 2, au moyen de l'équation suivante : $c_3 = \dfrac{atan(lacet) - 2c_2 x_{cible}}{3 x_{cible}^2}$ .

Enfin, l'unité de prédiction met en oeuvre une troisième étape E44 de détermination du coefficient du terme de degré 0. Ce coefficient est par exemple calculé en fonction de la position du véhicule cible 2 et des coefficients de terme de degré 2 et 3, au moyen de l'équation suivante : $c_0 = y_{cible} - c_2 x_{cible}^2 - c_3 x_{cible}^3$ .

A l'issu de l'étape 44, le coefficient du terme de degré 1 étant nul (étant supposé que le véhicule hôte 1 se déplace de façon colinéaire à la route), on dispose ainsi d'une équation modélisant la trajectoire TP du véhicule hôte 1 entre sa position $(X_{hôte}, Y_{hôte})$ et la position du véhicule cible 2 à l'instant t0 $(X_{cible\_t0}, Y_{cible\_t0})$ : $y = c_0 + c_2 x^2 + c_3 x^3$ .

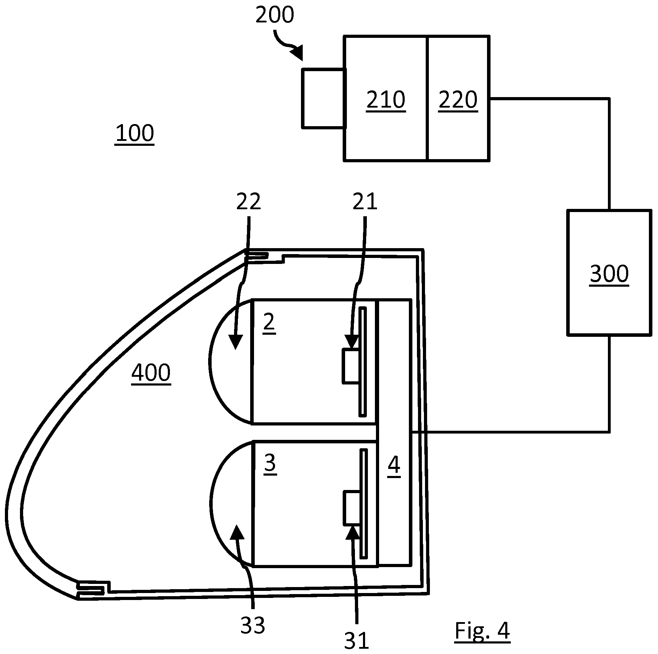

On a représenté en figure 4 un système d'éclairage 100 d'un véhicule automobile selon un mode de réalisation de l'invention.

Le système d'éclairage 100 comporte un système de capteur 200, comportant par exemple une caméra 210 braquée sur la route sur laquelle circule le véhicule automobile pour mettre en oeuvre l'étape E1 de la figure 2B ; et une unité de traitement 220, par exemple intégrée dans un microcontrôleur, recevant les images de la caméra 210 pour mettre en oeuvre les étapes E2 et E3 de la figure 2B et ainsi détecter et acquérir la position d'un objet cible sur la route à un instant donné.

Le système d'éclairage 100 comporte également une unité de prédiction 300, par exemple intégrée dans le même microcontrôleur que l'unité de traitement 220 ou en variante intégrée dans un autre microcontrôleur, recevant de l'unité de traitement 220 la position du véhicule cible à l'instant donné, et mettant en oeuvre les étapes E4, E5A, E5B, E6A, E6B, E7A et E7B de la figure 2B, pour ainsi prédire la position de l'objet cible sur la route à un instant futur et corriger la position acquise en fonction de la position prédite.

Le système d'éclairage 100 comporte en outre un dispositif d'éclairage 400 comprenant des premier et deuxièmes modules lumineux 2 et 3 apte à projeter chacun un faisceau pixélisé formant ensemble le faisceau d'éclairage de route pixélisé FP.

Chaque module comporte :

- une source lumineuse pixélisée 21, 31 comportant 900 émetteurs élémentaires agencés en matrice de 20 lignes par 45 colonnes, chacun des émetteurs élémentaires étant activable sélectivement pour émettre un faisceau lumineux élémentaire ; et
- un élément optique de projection 22, 32 associé à ladite source lumineuse pour projeter chacun desdits faisceaux lumineux élémentaires sous la forme d'un pixel présentant une largeur et une longueur de 0,3°.

Dans le mode décrit, la source lumineuse 21 comprend une matrice d'éléments électroluminescents monolithique, telle que décrit précédemment.

On pourra prévoir de remplacer la source lumineuse 21 par n'importe quel autre type de source lumineuse pixélisée décrit ci-dessus, comme par exemple une matrice de diodes électroluminescentes ou une source lumineuse associée à une matrice d'éléments optoélectroniques comme des micro-miroirs.

Chaque module lumineux 2 et 3 peut comprendre d'autres éléments que ceux précédemment décrits. Ces éléments ne seront pas décrits dans le cadre de la présente invention puisqu'ils n'interagissent pas de manière fonctionnelle avec les dispositions selon l'invention.

Enfin, le dispositif d'éclairage 400 comporte une unité de contrôle 4 apte à contrôler sélectivement chacun l'intensité lumineuse de chacun des pixels des faisceaux pixélisés émis par les modules 2 et 3 en fonction d'instructions de contrôle qu'elle reçoit, par exemple en allumant, en éteignant sélectivement les émetteurs élémentaires des sources lumineuses 21 et 31 ou encore en variant de façon croissante ou décroissante la puissance électrique fournie à chacun de ces émetteurs élémentaires. L'unité de contrôle 4, par exemple intégrée dans un microcontrôleur, reçoit de l'unité de prédiction 300 la position prédite à l'instant futur et met en oeuvre l'étape E8 de la figure 2B pour générer une zone non éblouissante dans le faisceau lumineux pixélisé en fonction de la position corrigée de l'objet cible.

La description qui précède explique clairement comment l'invention permet d'atteindre les objectifs qu'elle s'est fixée et notamment de proposer une solution permettant de proposer une solution permettant de générer une zone non-éblouissante dans un faisceau d'éclairage pour un objet cible à ne pas éblouir, lorsque l'objet cible possède une dynamique de mouvement élevée. Le procédé et le système d'éclairage selon l'invention permettent de générer la zone non éblouissante dans le faisceau d'éclairage de la route en étant positionnée non pas sur la position de l'objet cible déterminée au moment de l'acquisition de l'image de la route, mais bien sur une position corrigée en fonction d'une prédiction de sa position à un moment ultérieur, correspondant au moment auquel ledit faisceau d'éclairage de la route est émis avec la zone non éblouissante.

L'invention ne saurait se limiter aux modes de réalisation spécifiquement donnés dans ce document à titre d'exemples non limitatifs, et est définie par les revendications. Ainsi, les caractéristiques, les variantes et les différentes formes de réalisation de l'invention peuvent être associées les unes avec les autres, selon diverses combinaisons, dans la mesure où elles ne sont pas incompatibles ou exclusives les unes des autres.

**Revendications**

1. Procédé de commande d'un dispositif d'éclairage (400) d'un véhicule automobile hôte (1) pour l'émission d'un faisceau d'éclairage de la route (FP) non éblouissant pour un objet cible (2) sur cette route ; le procédé comportant les étapes suivantes :

   - acquisition (E1 ,E2,E3) par un système de capteur du véhicule automobile hôte de la position ($x_{cible\_t0}$, $y_{cible\_t0}$) de l'objet cible sur la route à un instant donné (t0);
   - prédiction (E4,E5A) par une unité de prédiction de la position ($x_{cible\_t1}$,$y_{cible\_t1}$) de l'objet cible sur la route à un instant futur ($t_1$) par rapport à l'instant donné ;
   - correction (E6A,E7A) par l'unité de prédiction de la position acquise de l'objet cible à un instant donné en fonction de la position prédite à l'instant futur ;
   - génération (E8) par le dispositif d'éclairage d'une zone non éblouissante (Z) dans un faisceau d'éclairage de la route qu'il émet en fonction de la position corrigée ($P_G$,$P_D$) de l'objet cible, et
   - dans lequel l'étape de prédiction (E4,E5A) comporte une sous-étape de modélisation (E4) d'une trajectoire (TP) du véhicule hôte (1), le procédé étant **caractérisé en ce que** ladite trajectoire (TP) du véhicule hôte (1) est modélisée depuis sa position ($x_{hôte}$, $y_{hôte}$) à l'instant donné ($t_0$) de l'étape d'acquisition vers la position

$(x_{cible\_t0}, y_{cible\_t0})$ de l'objet cible (2) acquise à ladite étape d'acquisition, et **en ce que** ladite trajectoire (TP) est modélisée par un polynôme du troisième degré dont les coefficients $(c_0,c_1,c_2,c_3)$ sont déterminés en fonction de la courbure de la route au niveau du véhicule hôte à l'instant donné (t0), des vitesses et position du véhicule hôte et de l'objet cible.

2. Procédé selon la revendication précédente, dans lequel l'étape d'acquisition (E1,E2,E3) comporte une première sous-étape de détection (E2) de l'objet cible (2), et une deuxième sous-étape d'acquisition (E3) de la position $(x_{cible\_t0}, y_{cible\_t0})$ et du type de l'objet cible.

3. Procédé selon la revendication 2, dans lequel l'étape de prédiction (E4,E5A) de la position de l'objet cible (2) est conditionnée au fait que l'objet cible soit un véhicule automobile cible, circulant dans le même sens que le véhicule hôte et à une vitesse supérieure à une vitesse seuil.

4. Procédé selon l'une des revendications précédentes, dans lequel l'instant futur (t1) de l'étape de prédiction (E4,E5A) est décalé par rapport à l'instant donné ($t_0$) de l'étape d'acquisition (E1,E2,E3) d'une durée calculée en fonction de la latence des étapes d'acquisition, de prédiction, de correction et de génération.

5. Procédé selon la revendication 1, dans lequel le coefficient du terme de degré 2 ($c_2$) est calculé en fonction de la courbure de la route et de l'empattement du véhicule hôte (1).

6. Procédé selon la revendication précédente, dans lequel le coefficient du terme de degré 1 ($c_1$) est nul.

7. Procédé selon la revendication précédente, dans lequel le coefficient du terme de degré 3 ($c_3$) est calculé en fonction du lacet et de la position $(x_{cible\_t0}, y_{cible\_t0})$ de l'objet cible (2).

8. Procédé selon l'une des revendications 5 à 7, dans lequel l'étape de prédiction (E4,E5A) comporte une sous-étape d'extrapolation (E5A) de la trajectoire modélisée (TP) jusqu'à l'instant futur ($t_1$) pour obtenir la position prédite de l'objet cible ($x_{cible\_t1}, y_{cible\_t1}$) à cet instant futur.

9. Procédé selon la revendication précédente, l'étape de correction (E6A, E7A) comportant le remplacement de la position acquise $(x_{cible\_t0}, y_{cible\_t0})$ par une paire de positions ($P_G,P_D$), correspondant aux positions des bords gauche et droit de l'objet cible dans la position prédite.

10. Procédé selon l'une des revendications 5 à 7, dans lequel l'étape de prédiction (E4,E5A) comporte une sous-étape d'extrapolation (E5A) de la trajectoire modélisée (TP) jusqu'à un premier instant futur ($t_1$) et jusqu'à un deuxième instant futur ($t_2$) pour obtenir des première ($x_{cible\_t1}, y_{cible\_t1}$) et deuxième ($x_{cible\_t2}, y_{cible\_t2}$) positions prédites de l'objet cible (2) à ces instants futurs, les premier et deuxième instants futurs correspondant à un décalage de l'instant donné par les latences respectivement minimum et maximum des étapes d'acquisition, de prédiction et de correction.

11. Procédé selon la revendication précédente, dans lequel l'étape de correction (E6A, E7A, E6B, E7B) comporte le remplacement de la position acquise (xcible_t0, ycible_t0) par une paire de positions (PG, PD), dans laquelle :

   - l'une des positions (PG) correspond à la position la plus à gauche des positions des bords gauches (PG1, PG2) dans les première (xcible_t1, ycible_t1) et deuxième (xcible_t2, ycible_t2) positions prédites.
   - l'autre des positions (PD) correspond à la position la plus à droite des positions des bords droits (PD1, PD2) dans les première et deuxième positions prédites.

12. Procédé selon l'une des revendications précédentes, dans lequel le faisceau d'éclairage de la route émis par le dispositif d'éclairage est un faisceau pixélisé (FP) et dans lequel l'étape de génération (E8) d'une zone non éblouissante (Z) consiste en l'allumage et/ou l'extinction et/ou la modification de l'intensité d'une pluralité de pixels de ce faisceau pixélisé en fonction de la position corrigée ($P_G,P_D$).

13. Système d'éclairage (100) pour véhicule automobile, configuré pour la mise en oeuvre du procédé selon l'une des revendications 1 à 12 comprenant :

   - Un système de capteur (200) apte à acquérir la position ($x_{cible\_t0}, y_{cible\_t0}$) d'un objet cible (2) sur la route à un instant donné ($t_0$) ;
   - Une unité de prédiction (300) apte à prédire la position ($x_{cible\_t1}, y_{cible\_t1}$) de l'objet cible sur la route à un instant futur ($t_1$) par rapport à l'instant donnée et à corriger la position acquise en fonction de la position prédite ;
   - Un dispositif d'éclairage (400) apte à émettre un faisceau d'éclairage de la route (FP) et à générer une zone non éblouissante (Z) dans ce faisceau en fonction de la position corrigée ($P_G,P_D$) de l'objet cible.

14. Programme d'ordinateur comportant une ou plusieurs séquences d'instructions exécutables par un microprocesseur et/ou un ordinateur intégré au système de la revendication 13, l'exécution desdites séquences d'instructions autorisant une mise en oeuvre du procédé selon l'une quelconque des revendications 1 à 12.

15. Moyen de stockage d'information, **caractérisé en ce qu'**il mémorise le programme d'ordinateur de la revendication 14 dont l'exécution autorise une mise en oeuvre du procédé selon l'une quelconque des revendications 1 à 12.

**Patentansprüche**

1. Verfahren zur Steuerung einer Beleuchtungsvorrichtung (400) eines Host-Kraftfahrzeugs (1) zum Emittieren eines Beleuchtungsstrahls der Straße (FP), der für ein Zielobjekt (2) auf dieser Straße nicht blendend ist; wobei das Verfahren die folgenden Schritte aufweist:

- Erfassung (E1, E2, E3) durch ein Sensorsystem des Host-Kraftfahrzeugs der Position $(x_{cible\_t0}, y_{cible\_t0})$ des Zielobjekts auf der Straße zu einem gegebenen Zeitpunkt $(t_0)$;
- Vorhersage (E4, E5A) durch eine Vorhersageeinheit der Position $(x_{cible\_t1}, y_{<cible\_t1})$ des Zielobjekts auf der Straße zu einem zukünftigen Zeitpunkt $(t_1)$ bezüglich des gegebenen Zeitpunkts;
- Korrektur (E6A, E7A) durch die Vorhersageeinheit der erfassten Position des Zielobjekts zu einem gegebenen Zeitpunkt abhängig von der vorhergesagten Position zum zukünftigen Zeitpunkt;
- Erzeugung (E8) durch die Beleuchtungsvorrichtung einer nicht blendenden Zone (Z) in einem Beleuchtungsstrahl der Straße, den sie abhängig von der korrigierten Position $(P_G, P_D)$ des Zielobjekts emittiert, und
- wobei der Vorhersageschritt (E4, E5A) einen Teilschritt der Modellierung (E4) einer Fahrspur (TP) des Host-Fahrzeugs (1) aufweist,

wobei das Verfahren **dadurch gekennzeichnet ist, dass** die Fahrspur (TP) des Host-Fahrzeugs (1) ausgehend von seiner Position $(x_{hôte}, y_{hôte})$ zum gegebenen Zeitpunkt $(t_0)$ des Erfassungsschritts zur im Erfassungsschritt erfassten Position $(x_{cible\_t0}, y_{cible\_t0})$ des Zielobjekts (2) modelliert wird, und dass die Fahrspur (TP) durch ein Polynom dritten Grades modelliert wird, dessen Koeffizienten $(c_0, c_1, c_2, c_s)$ abhängig von der Krümmung der Straße im Bereich des Host-Fahrzeugs zum gegebenen Zeitpunkt $(t_0)$, der Geschwindigkeit und Position des Host-Fahrzeugs und des Zielobjekts bestimmt werden.

2. Verfahren nach dem vorhergehenden Anspruch, wobei der Erfassungsschritt (E1, E2, E3) einen ersten Teilschritt der Erfassung (E2) des Zielobjekts (2) und einen zweiten Teilschritt der Erfassung (E3) der Position $(x_{cible\_t0}, y_{cible\_t0})$ und des Typs des Zielobjekts aufweist.

3. Verfahren nach Anspruch 2, wobei der Schritt der Vorhersage (E4, E5A) der Position des Zielobjekts (2) durch die Tatsache bedingt wird, dass das Zielobjekt ein Zielkraftfahrzeug ist, das in der gleichen Richtung wie das Host-Fahrzeug und mit einer höheren Geschwindigkeit als eine Schwellengeschwindigkeit fährt.

4. Verfahren nach einem der vorhergehenden Ansprüche, wobei der zukünftige Zeitpunkt $(t_1)$ des Vorhersageschritts (E4, E5A) bezüglich des gegebenen Zeitpunkts $(t_0)$ des Erfassungsschritts (E1, E2, E3) um eine Dauer verschoben ist, die abhängig von der Latenz der Schritte der Erfassung, der Vorhersage, der Korrektur und der Erzeugung berechnet wird.

5. Verfahren nach Anspruch 1, wobei der Koeffizient des Glieds 2. Grades $(c_2)$ abhängig von der Krümmung der Straße und vom Achsabstand des Host-Fahrzeugs (1) berechnet wird.

6. Verfahren nach dem vorhergehenden Anspruch, wobei der Koeffizient des Glieds 1. Grades $(c_1)$ Null ist.

7. Verfahren nach dem vorhergehenden Anspruch, wobei der Koeffizient des Glieds 3. Grades $(c_3)$ abhängig vom Gieren und der Position $(x_{cible\_t0}, y_{cible\_t0})$ des Zielobjekts (2) berechnet wird.

8. Verfahren nach einem der Ansprüche 5 bis 7, wobei der Vorhersageschritt (E4, E5A) einen Teilschritt der Extrapolation (E5A) der modellierten Fahrspur (TP) bis zum zukünftige Zeitpunkt $(t_1)$ aufweist, um die vorhergesagte Position des Zielobjekts $(x_{cible\_t1}, y_{cible\_t1})$ zu diesem zukünftigen Zeitpunkt zu erhalten.

9. Verfahren nach dem vorhergehenden Anspruch, wobei der Korrekturschritt (E6A, E7A) das Ersetzen der erfassten Position $(x_{cible\_t0}, y_{cible\_t0})$ durch ein Paar von Positionen $(P_G, P_D)$ aufweist, die den Positionen der linken und rechten Ränder des Zielobjekts in der vorhergesagten Position entsprechen.

10. Verfahren nach einem der Ansprüche 5 bis 7, wobei der Vorhersageschritt (E4, E5A) einen Teilschritt der Extrapolation (E5A) der modellierten Fahrspur (TP) bis zu einem ersten zukünftigen Zeitpunkt $(t_1)$ und bis zu einem zweiten zukünftigen Zeitpunkt $(t_2)$ aufweist, um erste $(x_{cible\_t1}, y_{cible\_t1})$ und zweite

($x_{cible\_t2}$, $y_{cible\_t2}$) vorhergesagte Positionen des Zielobjekts (2) zu diesen zukünftigen Zeitpunkten zu erhalten, wobei die ersten und zweiten zukünftigen Zeitpunkte einer Verschiebung des gegebenen Zeitpunkts durch die minimalen bzw. maximalen Latenzen der Schritte der Erfassung, der Vorhersage und der Korrektur entsprechen.

11. Verfahren nach dem vorhergehenden Anspruch, wobei der Korrekturschritt (E6A, E7A, E6B, E7B) das Ersetzen der erfassten Position ($x_{cible\_t0}$, $y_{cible\_t0}$) durch ein Paar von Positionen ($P_G$, $P_D$) aufweist, wobei:

- eine der Positionen ($P_G$) der am weitesten links liegenden Position der Positionen der linken Ränder (PG1, PG2) in den ersten ($x_{cible\_t1}$, $y_{cible\_t1}$) und zweiten ($x_{cible\_t2}$, $y_{cible\_t2}$) vorhergesagten Positionen entspricht,
- die andere der Positionen ($P_D$) der am weitesten rechts liegenden Position der Positionen der rechten Ränder (PD1, PD2) in den ersten und zweiten vorhergesagten Positionen entspricht.

12. Verfahren nach einem der vorhergehenden Ansprüche, wobei der von der Beleuchtungsvorrichtung emittierte Beleuchtungsstrahl der Straße ein gepixelter Strahl (FP) ist, und wobei der Schritt der Erzeugung (E8) einer nicht blendenden Zone (Z) aus dem Ein- und/oder Ausschalten und/oder der Änderung der Stärke einer Vielzahl von Pixeln dieses gepixelten Strahls abhängig von der korrigierten Position ($P_G$, $P_D$) besteht.

13. Beleuchtungssystem (100) für ein Kraftfahrzeug, das für die Durchführung des Verfahrens nach einem der Ansprüche 1 bis 12 konfiguriert ist, das enthält:

- ein Sensorsystem (200), das fähig ist, die Position ($x_{cible\_t0}$, $y_{cible\_t0}$) eines Zielobjekts (2) auf der Straße zu einem gegebenen Zeitpunkt ($t_0$) zu erfassen;
- eine Vorhersageeinheit (300), die fähig ist, die Position ($x_{cible\_t1}$, $y_{cible\_t1}$) des Zielobjekts auf der Straße zu einem zukünftigen Zeitpunkt ($t_1$) bezüglich des gegebenen Zeitpunkts vorherzusagen und die erfasste Position abhängig von der vorhergesagten Position zu korrigieren;
- eine Beleuchtungsvorrichtung (400), die fähig ist, einen Beleuchtungsstrahl der Straße (FP) zu emittieren und eine nicht blendende Zone (Z) in diesem Strahl abhängig von der korrigierten Position ($P_G$, $P_D$) des Zielobjekts zu erzeugen.

14. Computerprogramm, das eine oder mehrere Folgen von Anweisungen aufweist, die von einem Mikroprozessor und/oder einem in das System des Anspruchs 13 integrierten Computer ausgeführt werden können, wobei die Ausführung der Anweisungsfolgen eine Anwendung des Verfahrens nach einem der Ansprüche 1 bis 12 erlaubt.

15. Informationsspeichereinrichtung, **dadurch gekennzeichnet, dass** sie das Computerprogramm des Anspruchs 14 speichert, dessen Ausführung eine Anwendung des Verfahrens nach einem der Ansprüche 1 bis 12 erlaubt.

## Claims

1. Method for commanding a lighting device (400) of a host motor vehicle (1) to emit a road-illuminating beam (FP) that illuminates the road but that does not cause glare to a target object (2) on this road; the method comprising the following steps:

- acquiring (E1, E2, E3), by means of a sensor system of the host motor vehicle, the position ($x_{cible\_t0}$, $y_{cible\_t0}$) of the target object on the road at a given time ($t_0$);
- predicting (E4, E5A), by means of a predicting unit, the position ($x_{cible\_t1}$, $y_{cible\_t1}$), of the target object on the road at a time ($t_1$) that is in the future with respect to the given time;
- correcting (E6A, E7A), by means of the predicting unit, the target-object position acquired at a given time depending on the predicted position at the future time;
- generating (E8), by means of the lighting device, in a beam for illuminating the road that said device emits, a region (Z) that does not cause glare, depending on the corrected position ($P_G$, $P_D$) of the target object, and
- in which method the predicting step (E4, E5A) comprises a sub-step (E4) of modelling a path (TP) of the host vehicle (1), the method being **characterized in that** said path (TP) of the host vehicle (1) is modelled from its position ($x_{hôte}$, $y_{hôte}$) at the given time ($t_0$) of the acquiring step, to the position ($x_{cible\_t0}$, $y_{cible\_t0}$) of the target object (2) acquired in said acquiring step, and **in that** said path (TP) is modelled by a third-degree polynomial the coefficients ($c_0, c_1, c_2, c_3$) of which are determined depending on the curvature of the road level with the host vehicle at the given time ($t_0$), and on the speeds and position of the host vehicle and of the target object.

2. Method according to the preceding claim, wherein the acquiring step (E1, E2, E3) comprises a first sub-step (E2) of detecting the target object (2), and a second sub-step (E3) of acquiring the position ($x_{cible\_t0}$, $y_{cible\_t0}$) and the type of the target object.

3. Method according to Claim 2, wherein the step (E4, E5A) of predicting the position of the target object (2) is dependent on the target object being a target motor vehicle traveling in the same direction as the host vehicle and at a speed higher than a threshold speed.

4. Method according to one of the preceding claims, wherein the future time $(t_1)$ of the predicting step (E4, E5A) is offset with respect to the given time $(t_0)$ of the acquiring step (E1, E2, E3) by a computed duration depending on the latency of the acquiring, predicting, correcting and generating steps.

5. Method according to Claim 1, wherein the coefficient of the term of degree 2 $(c_2)$ is computed depending on the curvature of the road and on the wheelbase of the host vehicle (1).

6. Method according to the preceding claim, wherein the coefficient of the term of degree 1 $(c_1)$ is zero.

7. Method according to the preceding claim, wherein the coefficient of the term of degree 3 $(c_3)$ is computed depending on the yaw and the position $(x_{cible\_t0}, y_{cible\_t0})$ of the target object (2).

8. Method according to one of Claims 5 to 7, wherein the predicting step (E4, E5A) comprises a sub-step (E5A) of extrapolating the modelled path (TP) up to the future time $(t_1)$ in order to obtain the predicted target-object position $(x_{cible\_t1}, y_{cible\_t1})$ at this future time.

9. Method according to the preceding claim, the correcting step (E6A, E7A) comprising replacing the acquired position $(x_{cible\_t0}, y_{cible\_t0})$ with a pair of positions $(P_G, P_D)$ corresponding to the positions of the left and right edges of the target object in the predicted position.

10. Method according to one of Claims 5 to 7, wherein the predicting step (E4, E5A) comprises a sub-step (E5A) of extrapolating the modelled path (TP) up to a first future time $(t_1)$ and up to a second future time $(t_2)$, in order to obtain first and second predicted positions $(x_{cible\_t1}, y_{cible\_t1})$, $(X_{cible\_t2}, y_{cible\_t2})$ of the target object (2) at these future times, the first and second future times corresponding to an offset, from the given time, by the minimum and maximum latencies of the acquiring, predicting and correcting steps, respectively.

11. Method according to the preceding claim, wherein the correcting step (E6A, E7A, E6B, E7B) comprises replacing the acquired position $(x_{cible\_t0}, y_{cible\_t0})$ with a pair of positions $(P_G, P_D)$ in which:

    - one of the positions $(P_G)$ corresponds to the leftmost position of the positions $(P_{G1}, P_{G2})$ of the left edges in the first and second predicted positions $(x_{cible\_t1}, y_{cible\_t1})$, $(X_{cible\_t2}, y_{cible\_t2})$;
    - the other of the positions $(P_D)$ corresponds to the rightmost position of the positions $(P_{D1}, P_{D2})$ of the right edges in the first and second predicted positions.

12. Method according to one of the preceding claims, wherein the road-illuminating beam emitted by the lighting device is a pixelated beam (FP) and wherein the step (E8) of generating a region (Z) that does not cause glare consists in switching on and/or switching off and/or modifying the intensity of a plurality of pixels of this pixelated beam depending on the corrected position $(P_G, P_D)$.

13. Motor-vehicle lighting system (100) configured to implement the method according to one of Claims 1 to 12, and comprising:

    - a sensor system (200) able to acquire the position $(x_{cible\_t0}, y_{cible\_t0})$ of a target object (2) on the road at a given time $(t_0)$;
    - a predicting unit (300) able to predict the position $(x_{cible\_t1}, y_{cible\_t1})$ of the target object on the road at a time $(t_1)$ that is in the future with respect to the given time, and to correct the acquired position depending on the predicted position;
    - a lighting device (400) able to emit a road-illuminating beam (FP) and to generate, in this beam, a region (Z) that does not cause glare, depending on the corrected position $(P_G, P_D)$ of the target object.

14. Computer program comprising one or more sequences of instructions that are executable by a microprocessor and/or a computer integrated into the system of Claim 13, the execution of said sequences of instructions permitting the method according to any one of Claims 1 to 12 to be implemented.

15. Data-storage means, **characterized in that** it stores the computer program of Claim 14, the execution of which permits the method according to any one of Claims 1 to 12 to be implemented.

$(x_{cible\_t1}, y_{cible\_t1})$

FP

Z

2

$P_G$ $P_D$

$(x_{cible\_t0}, y_{cible\_T0})$

X

Y

1

Fig. 1A

DEBUT

Acquisition d'une image de la route à un instant $t_0$ — A1

Détection d'un objet cible à ne pas éblouir — A2

Détermination de la position ($X_{cible}$, $Y_{cible}$) — A3

Calcul des positions $P_G$ et $P_D$ — A4

Génération d'une zone non éblouissante entre $P_G$ et $P_D$ — A5

FIN

Fig. 1B

EP 3 860 877 B1

Fig. 2A

```
                              ┌─────────────────┐
                              │      DEBUT       │
                              └────────┬────────┘
                                       │
        E1 ┌──────────────────────────▼──────────┐
           │  Acquisition d'une image de la       │
           │      route à un instant t₀           │
           └──────────────────┬──────────────────┘
                              │
        E2 ┌──────────────────▼──────────────────┐
           │  Détection d'un objet cible à ne     │
           │           pas éblouir                │
           └──────────────────┬──────────────────┘
                              │
        E3 ┌──────────────────▼──────────────────┐
           │  Détermination de la position (X     │
           │          Y                           │
           └──────────────────┬──────────────────┘
                              │
        E4 ┌──────────────────▼──────────────────┐
           │  Modélisation de la trajectoire du   │
           │            véhicule hôte             │
           └──────────────────────────────────────┘
```

E6A    E5A          E6B   E5B

Extrapolation de la trajectoire modélisée à un instant $t_1 = t_0 + t_{Lat\_min}$

Extrapolation de la trajectoire modélisée à un instant $t_2 = t_0 + t_{Lat\_max}$

Calcul des positions $P_{G1}$ et $P_{D1}$ à $t_1$

Calcul des positions $P_{G2}$ et $P_{D2}$ à $t_2$

Calcul de $P_G = \min(P_{G1}, P_{G2})$

Calcul de $P_D = \max(P_{D1}, P_{D2})$

E7A

E7B

E8    Génération d'une zone non éblouissante entre $P_G$ et $P_D$

FIN

E3  Détermination de la position ($X_{cible\_t0}$, $Y_{cible\_t0}$)

Fig. 2B

E3

**Détermination :**
- de la position ($X_{cible\_t0}$, $Y_{cible\_t0}$)
- du type de l'objet cible

E31

**Stockage des** position ($X_{cible\_t0}$, $Y_{cible\_t0}$)

E32

**Acquisition de la** vitesse ($V_X$, $V_Y$)

E41

Type d'objet, sens et vitesse de circulation

Véhicule cible dans le même sens et $V_{cible} > 80km/h$

E42

Calcul de $C_2$

E43

Calcul de $C_3$

E44

Calcul de $C_0$

Fig. 3

Fig. 4

EP 3 860 877 B1